# EUROPEAN PATENT APPLICATION

(11) **EP 1 533 010 A1**
(43) Date of publication of application: **25.05.2005**
(21) Application number: 03730739.4
(22) Date of filing: 30.05.2003
(51) Int. Cl.: A63F 13/00, A63F 13/10, A63F 13/12

(54) **GAME DEVICE, PROGRAM, GAME DEVICE CONTROL METHOD, AND PROGRAM DISTRIBUTION DEVICE**

(30) Priority: 28.06.2002 JP 2002190565
(71) Applicant: Konami Corporation, Chiyoda-ku, Tokyo 100-6330 (JP); Konami Computer Entertainment Tokyo, Inc., Tokyo 104-6041 (JP)
(72) Inventor: IGARASHI, Koji, c/o Konami Computer Ent. Tokyo Inc, Tokyo 104-6041 (JP); MURAKAMI, Junichi, c/o Konami Comp. Ent.Tokyo Inc., Tokyo 104-6041 (JP); IIDA, Shutaro, c/o Konami Computer Ent. Tokyo Inc., Tokyo 104-6041 (JP)
(74) Representative: Winter, Brandl, Fürniss, Hübner, Röss, Kaiser, Polte Partnerschaft Patent- und Rechtsanwaltskanzlei
(86) International application number: PCT/JP2003/006848
(87) International publication number: WO 2004/002590

(57) **Abstract**

Each of game data storage parts (40), in which, while a replication of game data is created, and an item can be used on the basis of different game data, it is possible to prevent the item from increasing by the replication, stores original item data relating to an original item and replica item data relating to a replica item. Besides, a replication part (54) stores game data into a replication target on the basis of game data stored in a replication source so that a sum of the number of original items relating to the original item data stored in the game data storage part (40) of the replication source and the number of replica items relating to the replica item data stored in the game data storage part (40) becomes the number of replica items relating to the replica item data stored in the game data storage part (40) of the replication target. At this time, link data to correlate the replication target with the replication source is also stored.

## Description

### TECHNICAL FIELD

The present invention relates to a game apparatus, a program, a control method of a game apparatus, and a program delivery apparatus, and particularly to a game in which item data is stored as part of game data (save data) and a copy of the game data can be created as the need arises.

### BACKGROUND ART

Conventionally, for example, in a role playing game or the like, there is known one in which a play situation is stored as save data, and the game can be resumed later on the basis of the save data. Besides, among such games, there is also one in which a copy of save data can be created.

On the other hand, among recent games, there is one in which two game machines are communication connected by using a cable or many game machines are communication connected through a communication network such as the Internet, and an item acquired in a game space can be assigned to another player or can be exchanged with another player. However, in such a game, as described above, when a copy of save data can be created, the player can assign the item to another player or can exchange it with another player without spending his/her own item. That is, a play situation holding a specified item is stored as save data (original), a copy of the save data is created, and when the assignment or the like of the item is performed on the basis of one of the copy and the original, the game can be resumed in a play situation, by using the other save data, where the item is not spent.

The present invention has been made in view of the above problem, and provides a game apparatus, a program, a control method of a game apparatus, and a program delivery apparatus in which while a replication (copy) of game data is created and an item can be used on the basis of different game data, it is possible to prevent the item from increasing by the replication.

### DISCLOSURE OF THE INVENTION

In order to solve the above problem, a game apparatus of the invention includes plural game data storage means, replication source determination means for determining replication source game data storage means among the plural game data storage means, replication target determination means for determining replication target game data storage means among the plural game data storage means, and replication means for storing game data into the replication target game data storage means on the basis of game data stored in the replication source game data storage means, and is characterized in that the game apparatus includes link data storage means for storing link data to correlate two game data storage means with each other, each of the plural game data storage means stores original item data relating to an original item and replica item data relating to a replica item, and the replication means stores the game data into the replication target game data storage means on the basis of the game data stored in the replication source game data storage means so that a sum of the number of original items relating to the original item data stored in the replication source game data storage means and the number of replica items relating to the replica item data stored in the replication source game data storage means becomes the number of replica items relating to the replica item data stored in the replication target game data storage means, and stores the link data to correlate the replication target game data storage means with the replication source game data storage means into the link data storage means.

Also, a program of the invention is a program to cause a computer to function as plural game data storage means, replication source determination means for determining replication source game data storage means among the plural game data storage means, replication target determination means for determining replication target game data storage means among the plural game data storage means, replication means for storing game data into the replication target game data storage means on the basis of game data stored in the replication source game data storage means, and link data storage means for storing link data to correlate two game data storage means with each other, and is characterized in that each of the plural game data storage means stores original item data relating to an original item and replica item data relating to a replica item, and the replication means stores the game data into the replication target game data storage means on the basis of the game data stored in the replication source game data storage means so that a sum of the number of original items relating to the original item data stored in the replication source game data storage means and the number of replica items relating to the replica item data stored in the replication source game data storage means becomes the number of replica items relating to the replica item data stored in the replication target game data storage means, and stores the link data to correlate the replication target game data storage means with the replication source game data storage means into the link data storage means.

In the invention, the original item data relating to the original item and the replica item data relating to the replica item are stored in each of the game data storage means. The original item data indicates the number of original items which are owned by, for example, a player character and are originals (original copies) of a certain kind of item. The replica item data also indicates the number of replica items which are owned by, for example, a player character and are replicas (replications) of the same items. In the invention, in the case where the game data is stored into the replication target game data storage means on the basis of the game data stored in the replication source game data storage means, the sum of the number of the original items in the replication source and the number of the replica items is made the number of the replica items in the replication target. Further, the link data to correlate the replication target game data storage means with the replication source game data storage means is stored in the link data storage means.

According to the invention, the original item data and the replica item data are distinguished from each other and are stored in the game data storage means. Besides, the replication target game data storage means and the replication source game data storage means are correlated with each other by the link data stored in the link data storage means. Thus, in the case where a certain item is disposed of (for example, assigned, exchanged, deleted, discarded, etc.), an item relating to that, that is, a replication target or a replication source, can also be disposed of. In this way, while the replication of the game data is created and the item can be used on the basis of different game data, it is possible to prevent the item from increasing as a result of the replication.

Besides, according to an aspect of the invention, there is further included means for, in a case where disposal of an original item relating to the original item data stored in one of the plural game data storage means is instructed, updating the original item data stored in the game data storage means whose disposal is instructed so that the original item is decreased, and updating the replica item data stored in another game data storage means relating to a replica item as a direct or indirect replica of the original item so that the replica item is decreased. By doing so, in the case where the disposal of a certain original item is instructed, its direct or indirect replica can also be disposed of.

Besides, according to an aspect of the invention, there is further included means for, in a case where disposal of a replica item relating to the replica item data stored in one of the plural game data storage means is instructed, updating the original item data stored in one of the other game data storage means as a direct or indirect replication source of the game data storage means whose disposal is instructed so that the original item is decreased, and updating the replica item data stored in the other game data storage means relating to a replica item as a direct or indirect replica of the decreased original item so that the replica item is decreased. By doing so, in the case where the disposal of a certain replica item is instructed, the original item directly or indirectly relating to that and its direct or indirect replica can also be disposed of.

Also, according to an aspect of the invention, there is further included means for, in a case where deletion of game data storage means having no replication source is instructed, updating the original item data and the replica item data stored in one of game data storage means as a direct or indirect replication target of the game data storage means whose deletion is instructed so that replica items, of a number which is equal to the number of original items relating to the original item data stored in the game data storage means whose deletion is instructed, are changed to original items, changing link data, which is stored in the link data storage means and correlates the game data storage means whose deletion is instructed with the game data storage means as the replication target of the game data storage means, to link data to correlate the game data storage means as the replication target of the game data storage means the deletion of which is instructed with said one of the game data storage means, and deleting the game data storage means the deletion of which is instructed.

In this aspect, in the case where the deletion of the game data storage means having no replication source is instructed, the same number of replica items relating to one of the game data storage means as the direct or indirect replication target are changed to the original items as original items relating to the game data storage means of the deletion object. Besides, the link data to correlate the game data storage means whose deletion is instructed with the game data storage means as the replication target of the game data storage means is changed to the link data to correlate the game data storage means as the replication target of the game data storage means whose deletion is instructed with the one game data storage means. By doing so, in the case where the game data storage means having no replication source, that is, the game data storage means storing the original game data is deleted, one of the replication targets of the game data is promoted to the original and can be made to have its function.

### BRIEF DESCRIPTION OF THE DRAWINGS

Fig. 1 is a view showing a state where item exchange is performed using a portable game machine of an embodiment of the invention.
Fig. 2 is a view showing a hardware configuration of the portable game machine.
Fig. 3 is a functional block diagram showing a function realized in the portable game machine by executing a game program of an embodiment of the invention.
Fig. 4 is a view showing storage contents of a storage part.
Fig. 5 is a flowchart showing a replication processing of game data.
Fig. 6 is a flowchart showing item disposal processing.
Fig. 7 is a flowchart showing game data deletion processing.
Fig. 8 is a flowchart showing the game data deletion processing.
Fig. 9 is a view showing the overall structure of a game program delivery system according to another embodiment of the invention.

### BEST MODE FOR CARRYING OUT THE INVENTION

Hereinafter, embodiments of the invention will be described in detail with reference to the drawings.

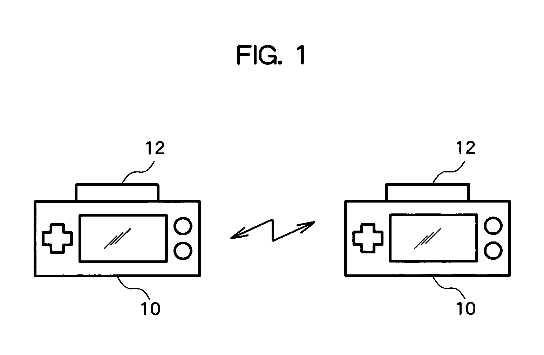

Fig. 1 is a view showing a state in which item exchange is performed using a game apparatus of an embodiment of the invention. The game apparatus of the embodiment is realized in such a manner that a portable game machine 10 executes a program stored in a ROM cartridge 12. Using the program, in each of the portable game machines 10, a player (or a game character operated by a player) can acquire various items in a game space, and can transmit them to the other portable game machine 10 by data communication. Incidentally, data communication between the portable game machines 10 may be wired or wireless. Besides, in the portable game machine 10, game data expressing a play situation can be stored in the ROM cartridge 12. Further, in the portable game machine 10, a replication of the game data (save data) can be created in another area of the ROM cartridge 12.

At this time, the replication is not completely identical to the replication source. That is, for example, in the case where game data of a replication source includes such data (original item data) that a player character owns N originals of an A item, game data of a replication target includes such data (replica item data) that the player character owns N replicas of the A item. Further, in the case where the replication of the game data is executed, link data to correlate the replication target with the replication source is stored into the ROM cartridge 12.

Besides, in the portable game machine 10, in the case where the disposal of a certain original item (assignment to another player, exchange for an item owned by another player, consumption, discard, etc.) is instructed in a game executed on the basis of certain game data stored in the ROM cartridge 12, replica item data included in game data as a direct or indirect replication target of the game data is updated so that the replica item is decreased. Besides, in the case where the disposal of a certain replica item is instructed, the original item data included in one of game data as a direct or indirect replication source of the game data is updated so that the original item is decreased, and replica item data included in game data as a direct or indirect replication target of the game data is updated so that the replica item is decreased.

Besides, in the portable game machine 10, in the case where the deletion of certain game data stored in the ROM cartridge 12 is instructed by operation means, such as a cross key or a button, provided in the portable game machine 10, when the game data is original game data, that is, game data having no replication source, one of game data as replication targets of the game data is promoted to original game data.

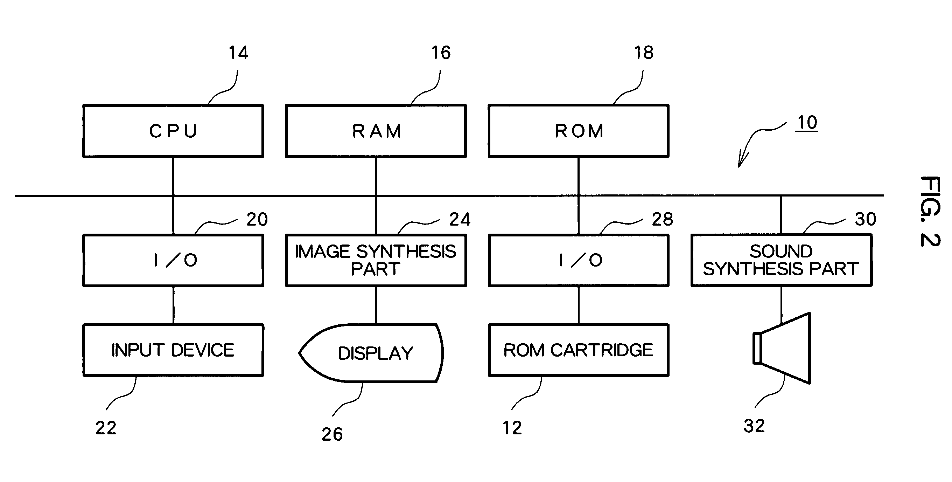

Fig. 2 is a view showing a hardware configuration of the portable game machine 10. As shown in the drawing, the portable game machine 10 is constituted by a CPU 14, a RAM 16, a ROM 18, input/output interfaces 20 and 28, an image synthesis part 24, a sound synthesis part 30, an input device 22, a display 26, a ROM cartridge 12, and aspeaker32. Here, the CPU 14, the RAM 16, the ROM 18, the input/output interfaces 20 and 28, the image synthesis part 24, and the sound synthesis part 30 are connected to a bus for transmitting addresses and data. Besides, the input device 22 comprising of a cross key and a press button disposed on the surface of the portable game machine 10 is connected to the input/output interface 20, and the ROM cartridge 12 is detachably connected to the input/output interface 28. Incidentally, the ROM cartridge 12 includes a ROM for storing a game program and an EEPROM for storing game data.

Besides, the ROM 18 stores various basic programs and data for basic processing independent of respective games. The CPU 14 is well-known data processing means, executes the basic programs stored in the ROM 18 and the game program stored in the ROM cartridge 12, and controls the respective parts of the portable game machine 10. The RAM 16 is used for the work of the CPU 14.

The image synthesis part 24 is comprising of, for example, a well-known image processing processor, and outputs display data to the display 26 in under control of the CPU 14. The display 26 is comprising of, for example, a liquid crystal display panel, and displays a game screen on the basis of the display data supplied from the image synthesis part 24. The display 26 is mounted on the surface of the portable game machine 10.

Besides, the sound synthesis part 30 is comprising of, for example, a well-known sound processor, and supplies sound signals relating to various game music and various effective sounds to the speaker 32 in under control of the CPU 14. The speaker 32 is incorporated into the chassis of the portable game machine 10, and outputs the various game music and the various effective sounds.

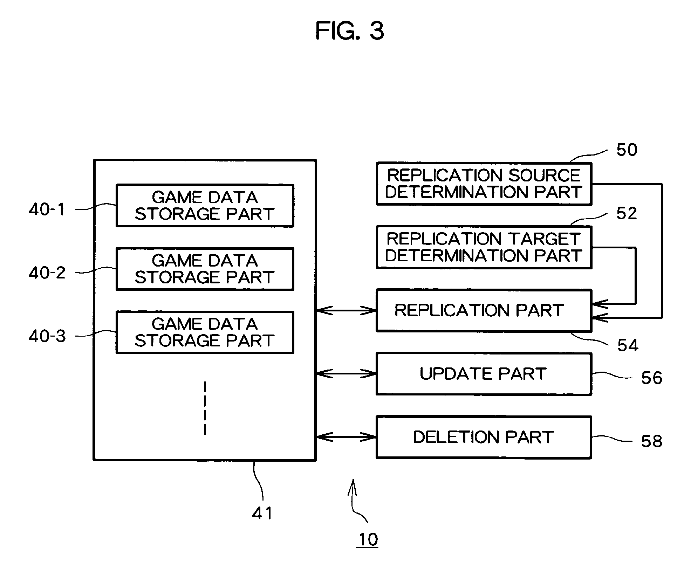

Next, Fig. 3 is a functional block diagram of the portable game machine 10. The portable game machine 10 executes the game program stored in the ROM cartridge 12 so that respective functional blocks shown in the drawing are realized. Incidentally, in the drawing, functions relating to the invention are mainly shown.

As shown in the drawing, the functions realized by the portable game machine 10 include a storage part 41, a replication source determination part 50, a replication target determination part 52, a replication part 54, an update part 56, and a deletion part 58. Plural game data storage parts 40 are included in the storage part 41.

The replication source determination part 50 determines a replication source among the game data storage parts 40 in accordance with, for example, the operation contents of the input device 22. Besides, the replication target determination part 52 determines a replication target among the game data storage parts 40 in accordance with, for example, the operation contents of the input device 22. Further, the replication part 54 stores game data into the game data storage part 40 of the replication target on the basis of game data stored in the game data storage part 40 of the replication source.

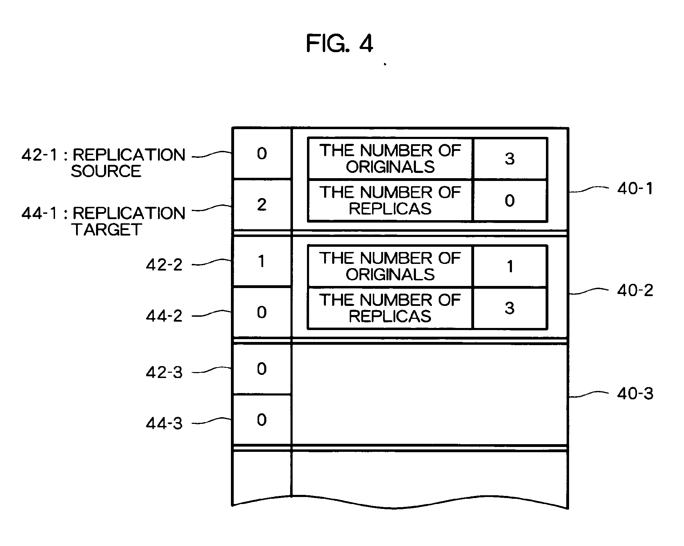

The game data storage part 40 stores play data expressing a play situation at a certain point in time, and particularly stores, as shown in Fig. 4, the number of originals of each item and the number of replicas in a part. Besides, the game data storage part 40 includes a replication source column 42 and a replication target column 44. Here, data to specify the game data storage part 40 as the replication source of the game data stored in the game data storage part 40 is stored in the replication source column 42. Besides, data to specify the game data storage part 40 as the replication target of the game data stored in the game data storage part 40 is stored in the replication target column 44. Here, an identification number given to each of the game data storage parts 40 is used as the data to specify the game data storage part 40. Besides, in the case where the replication target or the replication source does not exist, "0" is stored in the column.

Next, when the game data is stored into the game data storage part 40 of the replication target on the basis of the game data stored in the game data storage part 40 of the replication source, the replication part 54 adds the number of original items and the number of replica items relating to the replication source, and causes the sum to become the number of replica items relating to the replication target. Also, at this time, in order to correlate the game data storage part 40 of the replication target with the game data storage part 40 of the replication source, data to specify the game data storage part 40 of the replication source is stored in the game data storage part 40 of the replication target.

In the case where the disposal of an item is instructed by the input device 22 or the like, the update part 56 increases or decreases original item data (the number of originals) and replica item data (the number of replicas) included in the respective game data. For example, in the case where the disposal of an original item relating to one of the game data storage parts 40 is instructed by the input device 22 or the like, the original item data stored in the game data storage part 40 is updated so that the number of original items is decreased by one, and the replica item data relating to a replica item as a direct or an indirect replica of the original item stored in another game data storage part 40 is updated so that the number of replica items is decreased by one. In the case where the disposal of a replica item relating to one of the game data storage parts 40 is instructed by the input device 22 or the like, the original item data stored in one of the other game data storage parts 40 as a direct or an indirect replication source of the game data storage part 40 is updated so that the number of original items is decreased by one, and the replica item data relating to a replica item as a direct or an indirect replica of the original item stored in another game data storage part 40 is updated so that the number of replica items is decreased by one.

The deletion part 58 deletes game data in accordance with an instruction of the input device 22 or the like. At this time, when the deletion of the game data storage part 40 having no replication source is instructed by, for example, the input device 22 or the like, original item data and replica item data stored in one of the game data storage parts 40 as a direct or indirect replication target of the game data storage part 40 are updated so that replica items, identical in number to the number of original items relating to the original item data stored in the game data storage part 40 whose deletion is instructed, are changed to original items. At this time, data to specify the replication source stored in the game data storage part 40 as still another replication target is changed to data to specify said one of the game data strage parts 40. Then, the game data storage part 40 whose deletion has been instructed is deleted. Also, in the case where the deletion of the other game data storage part 40 is instructed, the game data storage part 40 is deleted.

Hereinafter, the data processing of the portable game machine 10 will be described in detail with reference to flowcharts.

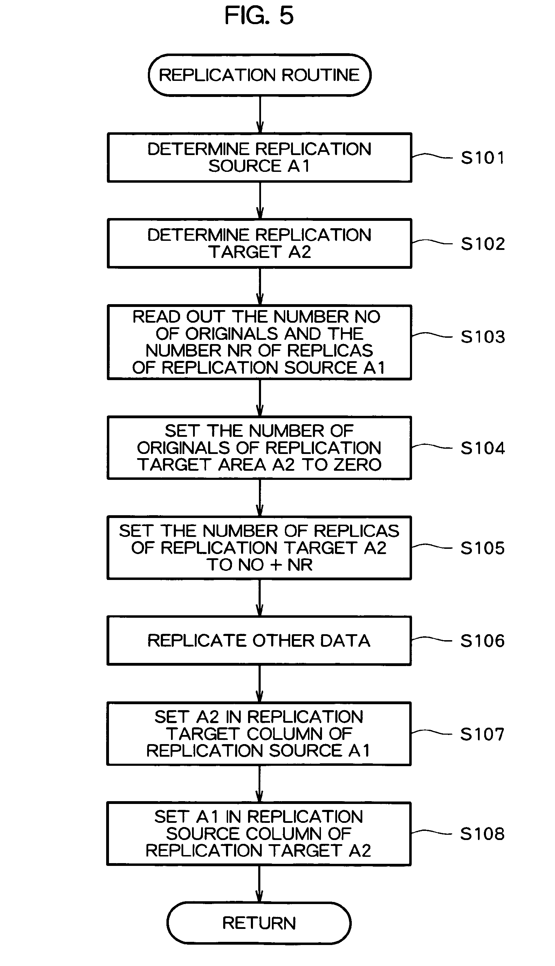

Fig. 5 is a flowchart showing replication processing in the portable game machine 10. As shown in the drawing, in the replication processing, first, the replication source determination part 50 determines the game data storage part 40 of the replication source (S101). Further, the replication target determination part 52 determines the replication target game data storage part (S102). Next, the replication part 54 reads out the number NO of originals of each item and the number NR of replicas thereof stored in the game data storage part 40 of the replication source (S103). Next, the replication part 54 stores zero as the number of originals of each item into the game data storage part 40 of the replication target (S104). The replication part 54 also stores the sum of the number NO of the originals and the number NR of the replicas, read out at S103, as the number of originals of each item into the game data storage part 40 of the replication target (S105).

Thereafter, the replication part 54 reads out other data, for example, the present situation of various characters, and the situation of a game space from the replication source, and writes them into the replication target (S106). Further, the replication part 54 writes an identification number of the game data storage part 40 of the replication target determined at S102 into the replication target column 44 of the game data storage part 40 of the replication source (S107), and writes an identification number of the game data storage part 40 of the replication source determined at S101 into the replication source column 42 of the game data storage part 40 of the replication target (S108).

By doing the above, the original item included in the game data of the replication source can be included as the replica item in the game data of the replication target. Besides, the replica item included in the game data of the replication source can also be included as the replica item in the game data of the replication target. At this time, since the replication target and the replication source can be correlated with each other through the replication source column 42 and the replication target column 44, when a certain item is disposed of, a relevant item can also be disposed of. In this way, it is possible to prevent the number of items from increasing due to the replication of the game data.

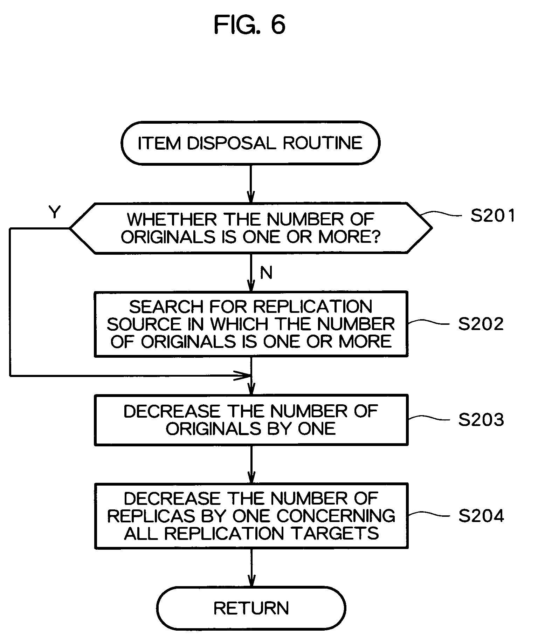

Next, Fig. 6 is a flowchart showing item disposal processing in the portable game machine 10. In the case where a game based on game data stored in a certain game data storage part 40 is played, when a player specifies an item by using the input device 22 and instructs disposal such as assignment, exchange, or discard, the item disposal processing shown in the drawing is executed. As shown in the drawing, in this processing, first, reference is made to the game data under play at present, and it is checked whether or not the number of originals of the specified item is one or more (S201). When it is less than one, that is, zero, it is judged that the replication source exists, and among the game data storage parts 40 as the direct or indirect replication sources of the game data storage part 40, one in which the number of originals of the specified item is one or more is searched for (S202). The game data storage part 40 of the direct or indirect replication source can be found by referring to the replication source column 42 of each of the game data storage parts 40. On the other hand, in the case where the number of originals of the specified item is one or more, the processing of S202 is skipped. Thereafter, the number of originals included in the game data under play at present or the game data found at S202 is decreased by one (S203). Further, the number of replicas of the item is decreased by one with respect to all of the direct or indirect replication targets of the game data in which the number of originals of the specified item is decreased by one at S203 (S204). Here, the direct replication target means game data directly replicated by the replication processing of Fig. 5. Besides, the indirect replication target means the case where game data is stored into the game data storage part 40 of the replication target after replication into the game data storage part 40 is performed at least once, for example, replication is performed once to a certain game data storage part 40, and replication is performed after that to another game data storage part 40.

According to the above processing, when the disposal of a certain item is instructed, the original of the item is disposed of, and all replicas resulting from the original are disposed of, so that it is possible to prevent the item from increasing due to the replication of the game data.

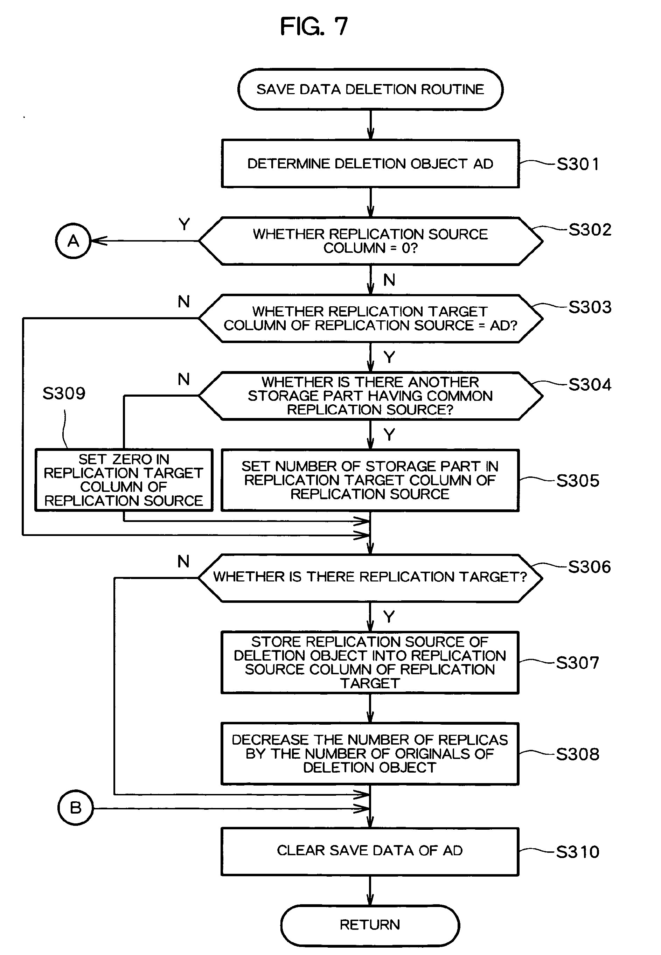

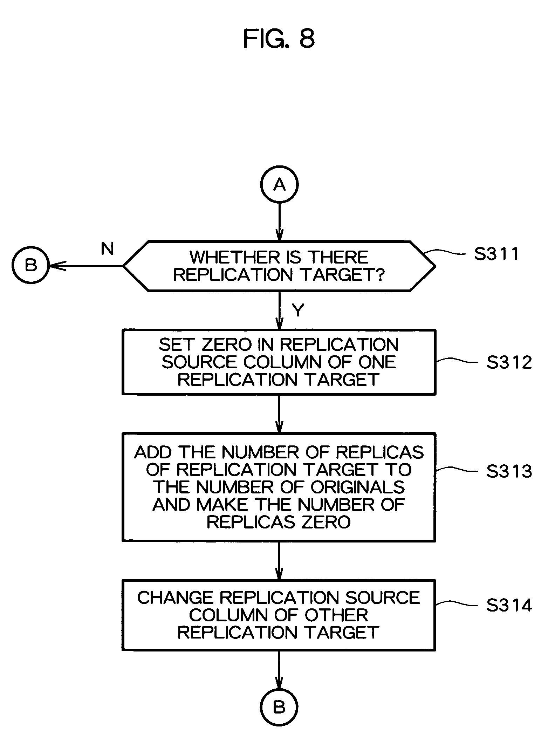

Next, Figs. 7 and 8 are flowcharts showing game data deletion processing. The processing shown in the drawings is executed in the case where a player specifies a certain game data storage part 40 by the input device 22 and instructs deletion thereof. In this processing, first, the game data storage part 40 as a deletion object is determined in accordance with the operation of the player (S301) . Next, it is judged whether or not zero is stored in the replication source column 42 included in the game data storage part 40 (S302). In the case where zero is not stored, it is judged that the game data created by replicating one of the game data storage parts 40 is specified as the deletion object, and the game data storage part 40 is searched for as the replication source , and it is judged whether or not the identification number of the game data storage part 40 of the deletion object is stored in the replication target column 44 (S303). When the identification number of the game data storage part 40 of the deletion object is stored, other game data storage part 40 in which the identification number of the game data storage part 40 of the replication source is stored in the replication source column 42, are searched for(S304). Then, when the game data storage part 40 as stated above exists, identification number of one of those is stored in the replication target column 44 of the game data storage part 40 as the replication source (S305). On the other hand, when the game data storage part 40 as stated above does not exist, zero is stored into the replication target column 44 of the game data storage part 40 as the replication source (S309). Thereafter, it is judged whether or not the replication target of the game data storage part 40 of the deletion object exists (S306). This judgment can be performed by referring to, for example, the replication target column 44 of the game data storage part 40 of the deletion object. Then, when the replication target exists, the identification number of the game data storage part 40 as the replication source of the game data storage part 40 of the deletion object is stored into the replication source column 42 of the game data storage part 40 of the replication target (S307). Further, the number of replicas of each item included in the game data storage part 40 of the replication target is decreased by the number of originals of each item included in the game data storage part 40 of the deletion object (S308). On the other hand, when the replication target does not exist, the processing of S307 and S308 is skipped. Thereafter, the game data stored in the game data storage part 40 of the deletion object is erased (S310).

On the other hand, at S302, when zero is stored in the replication source column 42, it is judged that the deletion of original game data, not replication of any game data, is instructed, and it is judged whether or not the replication target exists (S311). The replication target is the game data storage part 40 in which the identification number of the game data storage part 40 as the deletion object is stored in the replication source column 42. Then, when the replication target does not exist (S311), the game data stored in the game data storage part 40 of the deletion object is erased (S310). On the other hand, when the replication target exists (S311), zero is stored into the replication source column 42 included in one of the game data storage parts 40 of the replication target (S312), the number of replicas of each item included in the game data storage part 40 is added to the number of originals, and the number of replicas is made zero (S313). Also, the identification number of the game data storage part 40 in which zero is stored in the replication source column 42 at S312 is stored into the replication source column 42 included in the game data storage part 40 of another replication target (S314). Thereafter, the game data stored in the game data storage part 40 of the deletion object is erased (S310).

By doing the above, when the game data having no replication source is deleted, the replica item relating to one of the replication targets can be promoted to the original item. At this time, with respect to the other replication target, the replication source column 42 is modified so that promoted replica item is made the replication source.

According to the portable game machine 10 as described above, in a game based on certain game data, and in the case where a certain item is disposed of, the relevant item included in the game data of the replication target and the replication source of the game data can also be disposed of. By doing this, while the replication of the game data is created, and it is made possible to use the item on the basis of different game data, it is possible to prevent the item from increasing as a result of the replication.

Incidentally, the invention is not limited to the above embodiment.

For example, in the above description, although the link data to correlate the replication source with the replication target is stored in the replication source column 42 and the replication target column 44 included in each of the game data storage parts 40, it may be separately stored in the storage part 41. Also, although the above description has been given for the example in which the invention is applied to the case where the game data is stored in the portable game machine 10, the invention can also be similarly applied to a case where game data is stored in a stationary home-use game machine, or a case where game data of respective users are stored in a game server connected to a communication network such as the Internet.

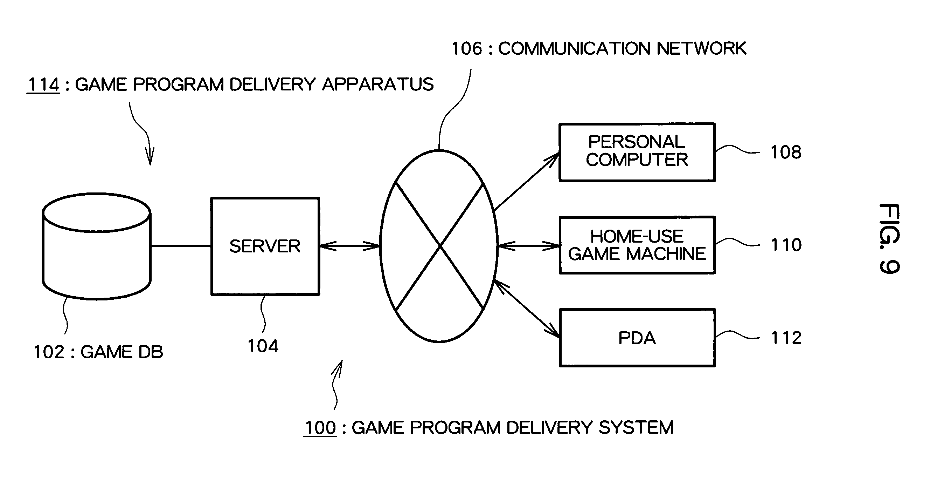

Further, in the above description, although the program is supplied from the ROM cartridge 12 as an information storage medium to the portable game machine 10, the program may be supplied through the communication network. Fig. 9 is a view showing the overall configuration of a program delivery system using the communication network. As shown in the drawing, this program delivery system 100 includes a game database 102, a server 104, a communication network 106, a personal computer 108, a home-use game machine 110, and a PDA (portable digital assistant) 112. A program delivery apparatus 114 is constituted by the game database 102 and the server 104 among these. The communication network 106 is comprising of, for example, the Internet or a cable television network. In this system, a program similar to the storage contents of the ROM cartridge 12 is stored in the game database 102. Then, a demander makes a game delivery request by using the personal computer 108, the home-use game machine 110, the PDA 112 or the like, and it is delivered to the sever 104 through the communication network 106. Then, the server 104 reads out the program from the game database 102 in response to the game delivery request and transmits it to the game delivery request source such as the personal computer 108, the home-use game machine 110 or the PDA 112. Here, although the game delivery is performed in response to the game delivery request, it may be transmitted from the server 104 without the need for a request. Also, it is not always necessary to deliver all programs necessary for realizing a game at the same time (batch delivery), and a necessary portion may be delivered in accordance with the stage of a game (split delivery). As stated above, when the game delivery is performed through the communication network 106, the demander can easily obtain the program.

### INDUSTRIAL APPLICABILITY

According to the invention, for example, when it is applied to a game machine or the like, in the case where a certain item is disposed of, a relevant item, that is, a replication target or a replication source, can also be disposed of. In this way, while replication of game data is created and an item can be used on the basis of different game data, it is possible to prevent the item from increasing due to replication.

## Claims

1. A game apparatus comprising:
plural game data storage means;
replication source determination means for determining replication source game data storage means among the plural game data storage means;
replication target determination means for determining replication target game data storage means among the plural game data storage means; and
replication means for storing game data into the replication target game data storage means on the basis of game data stored in the replication source game data storage means, the game apparatus being **characterized in that**
there is included link data storage means for storing link data to correlate two game data storage means with each other,
each of the plural game data storage means stores original item data relating to an original item and replica item data relating to a replica item, and
the replication means stores the game data into the replication target game data storage means on the basis of the game data stored in the replication source game data storage means so that a sum of the number of original items relating to the original item data stored in the replication source game data storage means and the number of replica items relating to the replica item data stored in the replication source game data storage means becomes the number of replica items relating to the replica item data stored in the replication target game data storage means, and stores the link data to correlate the replication target game data storage means with the replication source game data storage means into the link data storage means.

2. A game apparatus according to claim 1, **characterized by** further comprising means for, in a case where disposal of an original item relating to the original item data stored in one of the plural game data storage means is instructed, updating the original item data stored in the game data storage means whose disposal is instructed so that the number of original items is decreased, and updating the replica item data stored in another game data storage means relating to a replica item as a direct or indirect replica of the original item so that the number of replica items is decreased.

3. A game apparatus according to claim 1 or 2, **characterized by** further comprising means for, in a case where disposal of a replica item relating to the replica item data stored in one of the plural game data storage means is instructed, updating the original item data stored in one of other game data storage means as a direct or indirect replication source of the game data storage means whose disposal is instructed so that the original item is decreased, and updating the replica item data stored in another game data storage means relating to a replica item as a direct or indirect replica of the decreased original item so that the replica item is decreased.

4. A game apparatus according to any one of claims 1 to 3, **characterized by** further comprising means for, in a case where deletion of game data storage means having no replication source is instructed, updating the original item data and the replica item data stored in one of the game data storage means as direct or indirect replication targets of the game data storage means whose deletion is instructed so that replica items, equal in number to the number of original items relating to the original item data stored in the game data storage means whose is instructed are changed to original items, changing link data, which is stored in the link data storage means and correlates the game data storage means whose deletion is instructed with the game data storage means as the replication target of the game data storage means, to link data to correlate the game data storage means as the replication target of the game data storage means whose deletion is instructed with said one of the game data storage means, and deleting the game data storage means whose deletion is instructed.

5. A game apparatus according to any one of claims 1 to 4, wherein the plural game data storage means is comprising of one or plural memories, and the link data storage means is comprising of part of each of the plural game data storage means.

6. A game apparatus according to any one of claims 1 to 4, wherein the link data storage means and the plural game data storage means are comprising of one or plural memories, and a storage area relating to the link data storage means and a storage area relating to the plural game data storage means are separately provided in the one or plural memories.

7. A program to cause a computer to function as:
plural game data storage means;
replication source determination means for determining replication source game data storage means among the plural game data storage means;
replication target determination means for determining replication target game data storage means among the plural game data storage means;
replication means for storing game data into the replication target game data storage means on the basis of game data stored in the replication source game data storage means; and
link data storage means for storing link data to correlate two game data storage means with each other, the program being **characterized in that**
each of the plural game data storage means stores original item data relating to an original item and replica item data relating to a replica item, and
the replication means stores the game data into the replication target game data storage means on the basis of the game data stored in the replication source game data storage means so that a sum of the number of original items relating to the original item data stored in the replication source game data storage means and the number of replica items relating to the replica item data stored in the replication source game data storage means becomes the number of replica items relating to the replica item data stored in the replication target game data storage means, and stores the link data to correlate the replication target game data storage means with the replication source game data storage means into the link data storage means.

8. A control method of a game apparatus, comprising:
a replication source determination step of determining replication source game data storage means among plural game data storage means;
a replication target determination step of determining replication target game data storage means among the plural game data storage means; and
a replication step of storing game data into the replication target game data storage means on the basis of game data stored in the replication source game data storage means, the control method of the game apparatus being **characterized in that**
at the replication step, the game data is stored into the replication target game data storage means on the basis of the game data stored in the replication source game data storage means so that a sum of the number of original items relating to the original item data stored in the replication source game data storage means and the number of replica items relating to the replica item data stored in the replication source game data storage means becomes the number of replica items relating to the replica item data stored in the replication target game data storage means, and link data to correlate the replication target game data storage means with the replication source game data storage means is stored into the link data storage means.

9. A program delivery apparatus comprising an information storage medium storing a game program and a server, **characterized in that**:
a program is stored as at least part of the game program in the information storage medium, the program causing a computer to function as:
plural game data storage means;
replication source determination means for determining replication source game data storage means among the plural game data storage means;
replication target determination means for determining replication target game data storage means among the plural game data storage means;
replication means for storing game data into the replication target game data storage means on the basis of game data stored in the replication source game data storage means; and
link data storage means for storing link data to correlate two game data storage means with each other, and
the program being **characterized in that**
each of the plural game data storage means stores original item data relating to an original item and replica item data relating to a replica item, and
the replication means stores the game data into the replication target game data storage means on the basis of the game data stored in the replication source game data storage means so that a sum of the number of original items relating to the original item data stored in the replication source game data storage means and the number of replica items relating to the replica item data stored in the replication source game data storage means becomes the number of replica items relating to the replica item data stored in the replication target game data storage means, and stores the link data to correlate the replication target game data storage means with the replication source game data storage means into the link data storage means, and
the server reads out the game program from the information storage medium in response to a game delivery request and delivers the game program through a communication network.

10. An information storage medium storing a program recited in claim 7.
